# EUROPEAN PATENT SPECIFICATION

(11) **EP 3 736 150 B1**
(45) Date of publication and mention of the grant of the patent: **15.06.2022**
(21) Application number: 18898925.5
(22) Date of filing: 29.12.2018
(51) Int. Cl.: B60K 1/04, B60R 16/04, B60S 5/06, B60L 53/80, H01M 50/20, H01M 50/204, H01M 50/244, H01M 50/249, H01M 50/262

(54) **LOCKING MECHANISM FOR A BATTERY PACK**
VERRIEGELUNGSMECHANISMUS FÜR EIN BATTERIE-PACK
MÉCANISME DE VERROUILLAGE POUR UN BLOC DE BATTERIES

(30) Priority: 04.01.2018 CN 201810008473
(43) Date of publication of application: 11.11.2020
(73) Proprietor: NIO (Anhui) Holding Co., Ltd, Hefei City, Anhui Province (CN)
(72) Inventor: YUAN, Chunping, Shanghai 201804 (CN); BENGTSSON, Jan, Shanghai 201804 (CN); LI, Nan, Shanghai 201804 (CN); TIAN, Xiaotao, Shanghai 201804 (CN)
(74) Representative: Fraser, Karen
(86) International application number: PCT/CN2018/125490
(87) International publication number: WO 2019/134621

(56) References cited:
- EP-A1- 2 598 358
- WO-A1-2017/202210
- CN-A- 105 946 812
- CN-A- 106 080 159
- CN-U- 206 031 346
- CN-U- 206 031 346
- CN-U- 207 790 296
- KR-B1- 100 828 847
- US-B2- 7 543 666

## Description

### Technical Field

The invention relates to a locking mechanism for a battery pack, an assembly comprising a battery pack and the locking mechanism and a vehicle.

### Background Art

In recent years, as an energy source convenient to replace, batteries have been widely used in the field of automobiles. In the development process of electric vehicles, there are still some technical problems to be solved urgently, these obstacles restrict the large-scale promotion of the electric vehicles, and the charging problem is one of the significant obstacles. An electric vehicle requires a special charging facility and takes a large amount of time for each charge, compared with the situation where an internal combustion engine vehicle can be rapidly refueled at a gas station. For this reason, more and more attention has been paid to battery pack replacement (for short, battery swapping) as a fast way of electric vehicle energy supplement.

A battery pack locking mechanism for fastening an electric vehicle and a battery pack is generally arranged between the electric vehicle and the replaceable battery pack, and the advantages and disadvantages of the specific structure of the locking mechanism greatly influence the battery swap efficiency. Most of the existing battery pack locking mechanisms use bolt tightening mechanisms to fasten the battery pack to the automobile, and when the battery pack with this structure is swapped, the battery swap process is relatively time-consuming, and the battery swap operation is also relatively complicated.

CN patent No. CN 206031346 U discloses a locking mechanism, which comprises a fixing assembly 10 and a lock body assembly 20. The fixing assembly 10 is adapted to be connected to the body of a new energy vehicle, and the lock body assembly 20 is adapted to be connected to the housing of a power battery. The lock body assembly 20 has a central pulling shaft 22 having external threads on its locking section. The central pulling shaft 22 can slide into a threaded hole 122 on a locking plate 12 of the fixing assembly 10 and be threaded therein. When the lock body assembly 20 is connected to the fixing assembly 10 through its central pulling shaft 22, the locking mechanism fastens the power battery to the vehicle.

### Summary of the Invention

The invention aims to overcome the defects of the existing locking mechanisms for battery packs of electric vehicles, provide a new locking mechanism for a battery pack, an assembly comprising a battery pack and the locking mechanism and a vehicle, and particularly provide a battery pack locking mechanism good in stability and quick to assemble and disassemble, a battery pack and a vehicle to address the technical problems to be solved by the invention.

The following technical solutions are used to achieve the objective of the invention and address the technical problems to be solved. The invention is defined by the locking mechanism for a battery pack that is subject-matter of the independent claim 1.

Potential additional embodiments of the invention form the subject-matter of the dependent claims.

By virtue of the above technical solutions, the invention has at least the following advantages and beneficial effects:
(1) the battery pack locking mechanism is provided with the snap-fit portions with the first positions (interlocked state) and the second positions (unlocked state), and the transmission portion used for driving the snap-fit portions to switch between the first positions and the second positions. When the external driving part drives the transmission portion, the battery pack can be efficiently and rapidly dismounted and mounted, so that the dismounting time is shortened;
(2) according to the invention, by utilizing the self weight of the battery pack, a stable pretightening force is provided for the engagement between the locking member and the locking fitting member, and firm and stable locking between the battery pack and a vehicle body structure is realized;
(3) due to the fact that the snap-fit portions of the locking member are arranged to be spherical, the snap-fit portions can be in point contact with the inner wall of the first cavity so as to reduce friction between the parts and thus reduce abrasion; and
(4) the battery pack locking mechanism is compact in structure and light in weight.

The aforementioned description is only an overview of the technical solutions of the invention. In order to clearly understand the technical means of the invention, the invention can be implemented according to the contents of the description; and in order to make the aforementioned and other objectives, features and advantages of the invention more obvious and understandable, preferred embodiments are described in detail below with reference to the accompanying drawings.

### Brief Description of the Drawings

Fig. 1 is an exploded perspective view of a battery pack locking mechanism.
Fig. 2 is a cross-sectional view of the battery pack locking mechanism with a locking member and a locking fitting member in an interlocked state.
Fig. 3 is a cross-sectional view of the battery pack locking mechanism with the locking member and the locking fitting member in an unlocked state.
Fig. 4 is a schematic view of the battery pack locking mechanism switching between the unlocked state and the interlocked state.

### [Description of Symbols]

| | | | |
|---|---|---|---|
| 100: | Locking member | 200: | Locking fitting member |
| 110: | Housing | 120: | Snap-fit portion |
| 210: | First cavity | 111: | Second cavity |
| 112: | Through hole | 211: | Step |
| 130: | Transmission portion | 131: | First push rod |
| 132: | Elastic element | 133: | Second push rod |
| 134: | Permanent magnet | 140: | End face |
| 141: | First positioning groove | 142: | Second positioning groove |
| 135: | Positioning element | 150: | Bottom case |
| 160: | Driving fitting groove | 310: | Flange |
| 311: | Third cavity | | |

### Detailed Description of Embodiments

In order to further illustrate the technical means used to achieve the intended purpose of the invention and the technical effects of the invention, the implementation, structure and features of a battery pack locking mechanism, a battery pack and a vehicle proposed according to the invention and the effects thereof are described in detail hereinafter in conjunction with the accompanying drawings and the preferred embodiments.

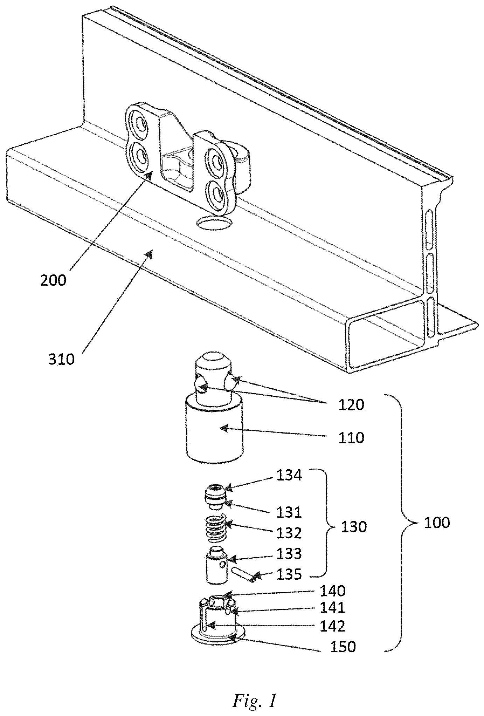

Fig. 1 is an exploded perspective schematic view of a battery pack locking mechanism according to an embodiment of the invention. Referring to Fig. 1, the battery pack locking mechanism according to an example of the invention mainly comprises: a locking member 100 and a locking fitting member 200, wherein one of the locking member 100 and the locking fitting member 200 is fixedly provided in a battery pack, and the other is fixedly arranged in a position at which the battery pack is fixed, and through interlocking or unlocking between the locking member and the locking fitting member, the battery pack can be mounted or dismounted on a vehicle. In the following description, the manner in which the locking fitting member 200 is fixedly arranged on the vehicle and the locking member 100 is fixedly arranged on the battery pack is exemplified.

The locking member 100 comprises a housing 110 and a snap-fit portion 120. The housing 110 is fixedly arranged on the battery pack. The snap-fit portion 120 can move between a first position and a second position relative to the housing 110. In the first position, part of the snap-fit portion 120 extends out of the housing 110 to be interlocked with the locking fitting member 200. In the second position, the snap-fit portion 120 is retracted into the housing 110 to be unlocked with the locking fitting member 200.

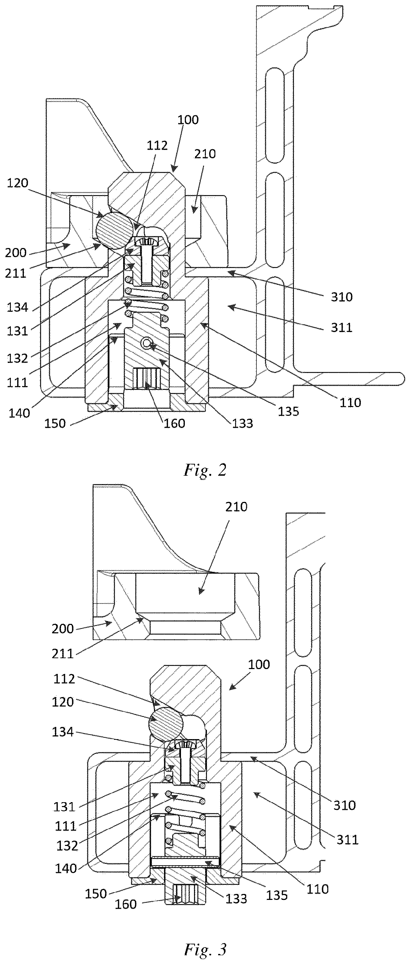

Fig. 2 is a cross-sectional view showing that the locking member 100 and the locking fitting member 200 are in an interlocked state according to an embodiment of the invention. Fig. 3 is a cross-sectional view showing that the locking member 100 and the locking fitting member 200 are in an unlocked state.

As shown in Figs. 2 and 3, the locking fitting member 200 is provided with a first cavity 210; and the housing 110 of the locking member 100 is provided with a head, and the head of the housing 110 is capable of extending into or being retracted from the first cavity 210 when the housing 110 and the locking fitting member 200 move relative to each other in a dismounting/mounting direction. In Fig. 2 or 3, the dismounting/mounting direction is in a vertical direction, the upward direction is for mounting, and the downward direction is for dismounting. The housing 110 is provided with a second cavity 111 extending to the head of the housing 110 and used for accommodating the snap-fit portion 120. A side wall of the housing 110 is provided with a through hole 112 in communication with the second cavity 111, and the through hole 112 is used for allowing at least part of the snap-fit portion 120 to extend out of the housing 110 from the through hole 112. It should be noted that the radial width and the axial length of the through hole 112 are not limited, and the through hole 112 may be configured to allow the snap-fit portion 120 as a whole to pass out of the housing 110 through the through hole 112, or the through hole 112 may also be configured to allow only part of the snap-fit portion 120 to be exposed out of the housing 110.

In the interlocked state, as shown in Fig. 2, the head of the housing 110 extends into the first cavity 210, and the snap-fit portion 120 moves to the first position (extending from the second cavity 111 via the through hole 112), and a pretightening force is formed among an inner wall of the first cavity 210, the snap-fit portion 120 and an inner wall of the housing 110 by using the gravity of the battery pack, so that the snap-fit portion 120 is clamped between the inner wall of the first cavity 210 and the inner wall of the housing 110. The inner wall of the housing 110 is an inner wall of the second cavity 111 and/or an inner wall of the through hole 112, and "and/or" as used herein means that the snap-fit portion 120 may be in contact with the inner wall of the second cavity 111, or may be in contact with the inner wall of the through hole 112, or may also be in contact with both the inner wall of the second cavity 111 and the inner wall of the through hole 112.

In the unlocked state, as shown in Fig. 3, the snap-fit portion 120 moves to the second position (retracted into the second cavity 111), and the head of the housing 110 is retracted from the first cavity 210.

Optionally, a step 211 is arranged in the first cavity 210. When the head of the housing 110 extends into the first cavity 210, at least part of the snap-fit portion 120 can move from the through hole 112 to the step 211 or from the step to the through hole 112. Further, when the head of the housing 110 extends into the first cavity 210, the surface of the step 211 is in communication with a wall surface of the through hole 112 (the step 211 is flush with the inner wall of the through hole 112), so that the movement of the snap-fit portion 120 between the through hole 112 and the step 211 is smoother. When moving to the first position, the snap-fit portion 120 is in contact with the step 211 and is clamped between the step 211 and the inner wall of the through hole 112.

Optionally, the snap-fit portion 120 is spherical, and further, the snap-fit portion 120 may be a metal ball made of a high-strength alloy steel material. In addition, the through hole 112 is in the shape of a cylinder having the same diameter as the spherical snap-fit portion 120, and the snap-fit portion 120 can move between the first position and the second position in an axial direction (lengthwise direction) of the through hole 112. The snap-fit portion 120 is configured to be spherical so as to facilitate the movement of the snap-fit portion 120, and point contact between the snap-fit portion 120 and components such as the surface of the step 211, the inner wall of the first cavity 210 or the inner wall of the second cavity 111 can be realized, so that friction between the components can be reduced, and then abrasion of the locking mechanism can be reduced.

It should be noted that the axial direction of the through hole 112 may extend in a thickness direction of the side wall of the housing 110; alternatively, the axial direction of the through hole 112 may form an included angle with the thickness direction of the side wall in which the through hole is formed, and an inclining direction of the step 211 is consistent with the axial direction of the through hole 112; and the surface of the step 211 is smoothly connected with the wall surface of the through hole 112 when the head of the housing 110 extends into the first cavity 210 (the step 211 is flush with the inner wall of the through hole 112). Thus, the snap-fit portion 120 can move more smoothly along the inclined through hole 112 and the step 211.

In some embodiments, the locking member 100 further comprises a transmission portion 130 located in the second cavity 111 and used for driving the snap-fit portion 120 to move between the first position and the second position.

As an optional embodiment, the transmission portion 130 comprises a first push rod 131, an elastic element 132 and a second push rod 133 arranged in the dismounting/mounting direction.

The first push rod 131 is in contact with the snap-fit portion 120 to support the snap-fit portion 120. Optionally, the snap-fit portion 120 comprises metal parts (in fact, the snap-fit portion 120 may be partly metal parts or entirely metal parts, for example, the aforementioned snap-fit portion 120 is a metal ball as an example), and the first push rod 131 may be provided with a permanent magnet 134 for attracting the snap-fit portion 120 so as to drive the snap-fit portion 120. The permanent magnet 134 may be bolted to a body of the first push rod 131.

Two ends of the elastic element 132 in the dismounting/mounting direction are respectively arranged on the first push rod 131 and the second push rod 133 in an abutting or fixed connection manner and used for supporting the first push rod 131 and performing transmission between the first push rod 131 and the second push rod 133. Optionally, the elastic element 132 may be a heavy spring.

In the dismounting/mounting direction, an opening is formed in the end, where the second push rod 133 is located, of the second cavity 111, so that an external driving part is capable of extending through the opening, driving the second push rod 133 to move towards or away from the first push rod 131, and thus driving the snap-fit portion 120 to move between the first position and the second position.

In an embodiment, an annular end face 140 is arranged in the second cavity 111, the end face 140 is perpendicular to the dismounting/mounting direction, and the end face 140 faces the through hole 112. It should be noted that the aforementioned expression "the end face 140 faces the through hole 112" is not intended to mean that the end face 140 must directly face the through hole 112, but means only that the end face 140 does not face away from the through hole 112. For example, as shown in Fig. 2, the expression "the end face 140 faces the through hole 112" refers to that the end face 140 is arranged upwards. The end face 140 is provided with a first positioning groove 141 and a second positioning groove 142 which are arranged spaced apart from each other in a circumferential direction, the first positioning groove 141 and the second positioning groove 142 are different in depth in the dismounting/mounting direction. It may as well be that the depth of the first positioning groove 141 in the dismounting/mounting direction is smaller than that of the second positioning groove 142 in the dismounting/mounting direction, namely the bottom of the second positioning groove 142 is closer to the opening of the second cavity 111 relative to the bottom of the first positioning groove 141. In addition, the transmission portion 130 is provided with a positioning element 135. Optionally, the positioning element 135 may be arranged on the second push rod 133. For instance, the positioning element 135 may be a positioning pin and radially and fixedly penetrates into the second push rod 133; alternatively, the positioning element may be a convex block integrally formed with the second push rod 133. The positioning element 135 is switchably accommodated in the first positioning groove 141 and the second positioning groove 142. As shown in Fig. 2, when the positioning element 135 is located at the bottom of the first positioning groove 141, the snap-fit portion 120 is kept at the first position. As shown in Fig. 3, when the positioning element 135 is located at the bottom of the second positioning groove 142, the snap-fit portion 120 is kept at the second position. Accordingly, the snap-fit portion 120 is stabilized in the interlocked or unlocked state by positioning the second push rod 133 at different axial positions. The positioning element 135 is capable of disengaging from the first positioning groove 141 or the second positioning groove 142, which the positioning element is located, along with the movement of the transmission portion 130 in the dismounting/mounting direction and moving into the other one of the first positioning groove 141 and the second positioning groove 142 along with the rotation of the transmission portion 130.

It should be noted that the end face 140 is not limited to be integrated with the inner wall of the second cavity 111. For example, in an optional example, the locking member 100 further comprises a bottom case 150, the bottom case 150 being hollow, and the bottom case 150 extends into the second cavity 111 and is arranged outside at least part of the transmission portion 130 in a sleeved manner, for example, the bottom case can be arranged outside the second push rod 133 in a sleeved manner. The end face 140 is arranged at the end, close to the through hole 112, of the bottom case 150, and meanwhile, the first positioning groove 141 and the second positioning groove 142 are also formed in the bottom case 150.

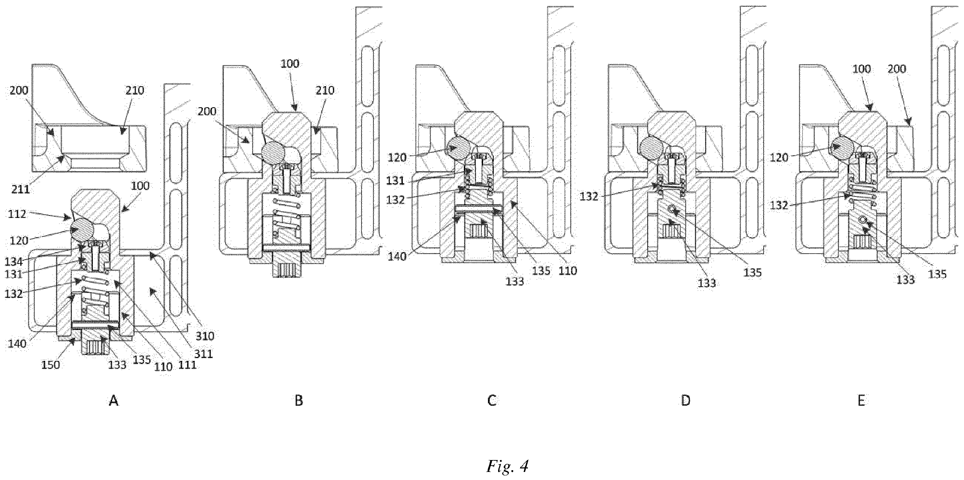

Fig. 4 is a schematic view showing switching of the battery pack locking mechanism between the unlocked state and the locked state. Referring to Fig. 4, the locking process of the battery pack locking mechanism is shown in the sequence of ABCDE.

Specifically, in the shown state A: the locking member 100 is separated from the locking fitting member 200, the positioning unit 135 is located at the bottom of the second positioning groove 142, and the snap-fit portion 120 is maintained at the second position for retracting into the housing 110.

The battery pack locking mechanism switches from the state A to the state B by moving the locking member 100 (or moving the battery pack) in a mounting direction (upward in the figures): as the locking member 100 moves upwards, the head of the housing 110 extends into the first cavity 210.

By upward movement of the second push rod 133, the battery pack locking mechanism switches from the state B to the state C: as the second push rod 133 moves upwards, the positioning element 135 moves away from the second positioning groove 142 and is beyond the end face 140, and the elastic element 132 is compressed to push the first push rod 131 to move upwards, thereby pushing the snap-fit portion 120 to move to the first position for extending out of the housing 110 and to be clamped between the inner wall of the housing 110 and the inner wall of the first cavity 210.

The battery pack locking mechanism switches from the state C to the state D by rotating the second push rod 133 in the circumferential direction: as the second push rod 133 rotates, the positioning element 135 rotates at an angle in the circumferential direction and is aligned with the first positioning groove 141.

The battery pack locking mechanism switches from the state D to the state E by downward movement of the second push rod 133 (in fact, just releasing the second push rod 133 due to the arrangement of the elastic element 132): as the second push rod 133 moves downwards, the positioning element 135 moves to the bottom of the first positioning groove 141, so that the snap-fit portion 120 is kept at the first position, and the locking member 100 and the locking fitting member 200 are stably interlocked; and in this situation, the elastic element 132 performs a certain relaxation.

Similar to the locking process described above, the unlocking process of the battery pack locking mechanism is shown in the sequence of EDCBA in Fig. 4.

It should also be noted that the end face 140 is not limited to a plane, but may be inclined. In fact, the portion of the end face 140 between the first positioning groove 141 and the second positioning groove 142 may have a slope (not shown in the figures), and the fitting structure between the transmission portion 130 and the positioning grooves may be configured to be a structure similar to that of an existing automatic pen, so that the transmission portion 130 moves only in the dismounting/mounting direction (without rotating the transmission portion 130), and the positioning element 135 switches between a state of being clamped in the first positioning groove 141 and a state of being clamped in the second positioning groove 142.

Optionally, as shown in Figs. 2 and 3, a driving fitting groove 160, which may be, for example, an inner octagonal groove, is formed in the end, facing the opening of the second cavity 111, of the second push rod 133 for mutual engagement with the external driving part, so that the external driving part drives the second push rod 133 to move or rotate circumferentially in a dismounting direction. It should be noted that the driving fitting groove 160 is not limited to be in the shape of an inner octagon, but may be of other groove types compatible with external driving parts; and it is also possible, for example, to provide a bottom end of the second push rod 133 as a regular prism structure so as to be fit with a battery swap mechanism, instead of being limited to providing the driving fitting groove 160 in the transmission portion 130 for fitting with the battery swap mechanism. In addition, it is not limited to using the battery swap mechanism for automatic battery swapping, and a sleeve capable of cooperating with the driving fitting groove 160 can also be used for manual battery swapping.

Optionally, the locking member 100 may comprise a plurality of snap-fit portions 120, and a plurality of through holes 112 are correspondingly provided; and the snap-fit portions 120 are driven by the transmission portion 130 to move synchronously so that the snap-fit portions 120 can be simultaneously located at the first positions and can be simultaneously located at the second positions, thereby enabling the engagement of the locking member 100 with the locking fitting member 200 to be more stable. For example, in an example in which the snap-fit portions 120 are metal balls made of an alloy steel material, each locking member 100 is provided with three snap-fit portions 120, and the housing 110 is provided with three through holes 112 spaced apart from one another (one end of each of the three through holes 112 inside the second cavity 111 is in communication with the second cavity 111). The three snap-fit portions 120 can synchronously move in the through holes 112 where the three snap-fit portions are located under the driving of the transmission portion 130, so that the three snap-fit portions 120 can be simultaneously located in the first positions and the second positions.

A battery pack having a flange 310 is also disclosed. The flange 310 is provided with a third cavity 311, the locking member 100 as described in any one of the above embodiments fixedly penetrates into the third cavity 311, and the locking member 100 is fixed in the third cavity 311 of the flange 310 by welding, threaded connection, integral molding or other methods. It should be noted that the locking member 100 may be partially disposed within the third cavity 311. For example, in an example shown in Fig. 3, the head of the housing 110 may be exposed; and the locking member 100 may also be disposed entirely within the third cavity 311, the end where the head of the housing 110 of the third cavity 311 is located may be configured to receive the locking fitting member 200 at the moment, such that the locking member 100 is interlocked with the locking fitting member 200 within the third cavity 311. By arranging at least part of the locking member 100 within the flange 310, the overall height of the battery pack to which the locking member 100 is fixed can be reduced.

A vehicle comprising the locking mechanism according to the invention or according to any of the optional embodiments is also being disclosed. The locking fitting member 200 is fixed to the vehicle and can be generally fixed to the bottom of a vehicle body, for example, mounting holes can be formed in the locking fitting member 200, and the locking fitting member 200 is screwed to the bottom of the vehicle body through bolts.

It should be noted that, depending on the size and weight of the battery pack, a plurality of battery pack locking mechanisms may be provided, for example, a plurality of locking members 100 may be arranged at intervals on the flanges 310 on both sides of the battery pack, and a plurality of locking fitting members 200 may be correspondingly arranged at the bottom of the vehicle body so that the battery pack can be more stably locked to the vehicle body.

It should also be noted that the locking fitting member 200 is not limited to being arranged on a vehicle, but may be arranged in any apparatus or location where a battery pack needs to be fixed. For example, when the battery pack locking mechanism of the invention is applied to a battery swap platform, the locking fitting member 200 may be fixed to the battery swap platform.

The foregoing descriptions are merely preferred embodiments of the invention, and are not intended to limit the invention in any form. Although the invention has been disclosed as above by means of the preferred embodiments, these embodiments are not for the purpose of limiting the invention. Those skilled in the art can make alterations or modifications to the technical contents disclosed above without departing from the scope of the invention as defined by the subject-matter of the appended claims.

## Claims

1. A locking mechanism for a battery pack, **characterized by** comprising:
a locking member (100) and a locking fitting member (200), wherein the locking member (100) comprises a housing (110) and a snap-fit portion (120);
one of the housing (110) and the locking fitting member (200) is fixedly provided in the battery pack, and the other is fixedly arranged in a position at which the battery pack is fixed;
the snap-fit portion (120) is movable between a first position and a second position with respect to the housing (110); in the first position, part of the snap-fit portion (120) extends out of the housing (110) to be interlocked with the locking fitting member (200); and in the second position, the snap-fit portion (120) is retracted into the housing (110) to be unlocked with the locking fitting member (200);the locking fitting member (200) is provided with a first cavity (210); the housing (110) is provided with a head which is capable of extending into or being retracted from the first cavity (210) when the housing and the locking fitting member (200) move relative to each other in a dismounting/mounting direction;
the housing (110) is provided with a second cavity (111) extending to the head for accommodating the snap-fit portion (120); a side wall of the housing (110) is provided with a through hole (112) in communication with the second cavity (111);
in an interlocked state, the head extends into the first cavity (210), and the snap-fit portion (120) moves to the first position and is clamped between an inner wall of the first cavity (210) and an inner wall of the housing (110); and
in an unlocked state, the snap-fit portion (120) moves to the second position, and the head is retracted from the first cavity (210).

2. The locking mechanism according to claim 1, **characterized in that**,
a step (211) is arranged in the first cavity (210); and
in the first position, the snap-fit portion (120) is in contact with the step (211), and is clamped between the step (211) and an inner wall of the through hole (112).

3. The locking mechanism according to claim 2, **characterized in that**,
the snap-fit portion (120) is spherical, and the through hole (112) is a cylindrical through hole having the same diameter as the snap-fit portion (120); and
when the head of the housing (110) extends into the first cavity (210), the snap-fit portion (120) is movable between the first position and the second position in an axial direction of the through hole (112).

4. The locking mechanism according to claim 3, **characterized in that**,
an included angle is formed between the axial direction of the through hole (112) and a thickness direction of the side wall, and an inclining direction of the step (211) is consistent with the axial direction of the through hole (112).

5. The locking mechanism according to claim 1, **characterized in that**,
the locking member (100) further comprises a transmission portion (130) located in the second cavity (111) and used for driving the snap-fit portion (120) to move between the first position and the second position.

6. The locking mechanism according to claim 5, **characterized in that**, the transmission portion (130) comprises: a first push rod (131), an elastic element (132) and a second push rod (133) arranged in the dismounting/mounting direction;
the first push rod (131) is used for supporting the snap-fit portion (120);
two ends of the elastic element (132) in the dismounting/mounting direction are respectively arranged on the first push rod (131) and the second push rod (133); and
in the dismounting/mounting direction, an opening is formed in the end, where the second push rod (133) is located, of the second cavity (111), so that an external driving part is capable of extending through the opening, driving the second push rod (133) to move towards or away from the first push rod (131), and thus driving the snap-fit portion (120) to move between the first position and the second position.

7. The locking mechanism according to claim 6, **characterized in that**,
the snap-fit portion (120) comprises a metal part; and
the first push rod (131) is provided with a permanent magnet (134) for attracting the snap-fit portion (120) so as to drive the snap-fit portion (120) to move.

8. The locking mechanism according to claim 6, **characterized in that**,
an annular end face (140) is arranged in the second cavity (111), the end face (140) is perpendicular to the dismounting/mounting direction, and the end face (140) faces the through hole (112);
the end face (140) is provided with a first positioning groove (141) and a second positioning groove (142) which are arranged spaced apart from each other in a circumferential direction, and the depth of the first positioning groove (141) in the dismounting/mounting direction is smaller than that of the second positioning groove (142) in the dismounting/mounting direction;
the transmission portion (130) is provided with a positioning element (135); the positioning element (135) is switchably accommodated in the first positioning groove (141) and the second positioning groove (142); when the positioning element (135) is located at the bottom of the first positioning groove (141), the snap-fit portion (120) is kept at the first position; when the positioning element (135) is located at the bottom of the second positioning groove (142), the snap-fit portion (120) is kept at the second position; and
the positioning element (135) is capable of disengaging from the positioning groove along with the movement of the transmission portion (130) in the dismounting/mounting direction and moving into the other positioning groove along with the rotation of the transmission portion (130).

9. The locking mechanism according to claim 8, **characterized in that**,
the locking member (100) further comprises a hollow bottom case (150) which extends into the second cavity (111) and is arranged outside at least part of the transmission portion (130) in a sleeved manner; and
the end face (140) is arranged at the end, close to the through hole (112), of the bottom case (150).

10. The locking mechanism according to claim 8, **characterized in that**,
the positioning element (135) is a positioning pin or a convex block and arranged on the second push rod (133).

11. The locking mechanism according to claim 6, **characterized in that**,
the end, facing the opening, of the second push rod (133) is provided with a driving fitting groove (160) for mutual engagement with the external driving part.

12. The locking mechanism according to claim 5, **characterized in that**,
the locking member (100) is provided with a plurality of snap-fit portions (120), and the housing (110) is provided with a plurality of corresponding through holes (112); and the plurality of snap-fit portions (120) are driven by the transmission portion (130) to move synchronously, so that the plurality of snap-fit portions (120) are locatable at the first positions and the second positions simultaneously.

13. An assembly comprising a battery pack and the locking mechanism as claimed in any of claims 1 to 12, **characterized in that** the battery pack is provided with a flange (310), the flange (310) has a third cavity (311) through which penetrates the locking member (100) of the locking mechanism.

14. A vehicle, **characterized by** comprising the locking mechanism as claimed in any one of claims 1 to 12; and the locking fitting member (200) is fixedly arranged on the vehicle.

## Patentansprüche

1. Verriegelungsmechanismus für ein Batterie-Pack, **dadurch gekennzeichnet, dass** es Folgendes umfasst:
ein Verriegelungselement (100) und ein Verriegelungsbefestigungselement (200), wobei das Verriegelungselement (100) ein Gehäuse (110) und einen Einrastteil (120) umfasst;
wobei eines aus dem Gehäuse (110) und dem Verriegelungsbefestigungselement (200) fest in dem Batterie-Pack bereitgestellt ist und das andere fest in einer Position angeordnet ist, an der das Batterie-Pack befestigt ist;
wobei der Einrastteil (120) zwischen einer ersten Position und einer zweiten Position bezüglich des Gehäuses (110) bewegbar ist; wobei sich, in der ersten Position, ein Teil des Einrastteils (120) aus dem Gehäuse (110) heraus erstreckt, um mit dem Verriegelungsbefestigungselement (200) verriegelt zu werden; und wobei, in der zweiten Position, der Einrastteil (120) in das Gehäuse (110) zurückgezogen wird, um vom Verriegelungsbefestigungselement (200) entriegelt zu werden; wobei das Verriegelungsbefestigungselement (200) mit einem ersten Hohlraum (210) versehen ist; wobei das Gehäuse (110) mit einem Kopf versehen ist, der in der Lage ist, sich in den ersten Hohlraum (210) zu erstrecken oder aus diesem zurückgezogen zu werden, wenn sich das Gehäuse und das Verriegelungsbefestigungselement (200) relativ zueinander in einer Demontage-/Montagerichtung bewegen;
wobei das Gehäuse (110) mit einem zweiten Hohlraum (111) versehen ist, der sich zum Kopf erstreckt, um den Einrastteil (120) aufzunehmen; wobei eine Seitenwand des Gehäuses (110) mit einem Durchgangsloch (112) in Verbindung mit dem zweiten Hohlraum (111) versehen ist;
wobei sich, in einem verriegelten Zustand, der Kopf in den ersten Hohlraum (210) erstreckt, und wobei sich der Einrastteil (120) in die erste Position bewegt und zwischen einer Innenwand des ersten Hohlraums (210) und einer Innenwand des Gehäuses (110) eingeklemmt wird; und wobei sich, in einem entriegelten Zustand, der Einrastteil (120) in die zweite Position bewegt und der Kopf aus dem ersten Hohlraum (210) zurückgezogen wird.

2. Verriegelungsmechanismus nach Anspruch 1, **dadurch gekennzeichnet, dass**
eine Stufe (211) im ersten Hohlraum (210) angeordnet ist; und
in der ersten Position, der Einrastteil (120) in Kontakt mit der Stufe (211) ist und zwischen der Stufe (211) und einer Innenwand des Durchgangslochs (112) eingeklemmt ist.

3. Verriegelungsmechanismus nach Anspruch 2, **dadurch gekennzeichnet, dass**
der Einrastteil (120) sphärisch ist, und dass das Durchgangsloch (112) ein zylindrisches Durchgangsloch ist, das den gleichen Durchmesser aufweist wie der Einrastteil (120); und
wenn sich der Kopf des Gehäuses (110) in den ersten Hohlraum (210) erstreckt, der Einrastteil (120) zwischen der ersten Position und der zweiten Position in einer axialen Richtung des Durchgangslochs (112) bewegbar ist.

4. Verriegelungsmechanismus nach Anspruch 3, **dadurch gekennzeichnet, dass**
ein eingeschlossener Winkel zwischen der axialen Richtung des Durchgangslochs (112) und einer Dickenrichtung der Seitenwand gebildet ist, und eine Neigungsrichtung der Stufe (211) konsistent mit der axialen Richtung des Durchgangslochs (112) ist.

5. Verriegelungsmechanismus nach Anspruch 1, **dadurch gekennzeichnet, dass**
das Verriegelungselement (100) ferner einen Übertragungsteil (130) umfasst, der im zweiten Hohlraum (111) befindlich ist und verwendet wird, um den Einrastteil (120) anzutreiben, um sich zwischen der ersten Position und der zweiten Position zu bewegen.

6. Verriegelungsmechanismus nach Anspruch 5, **dadurch gekennzeichnet, dass** der Übertragungsteil (130) Folgendes umfasst: eine erste Druckstange (131), ein elastisches Element (132) und eine zweite Druckstange (133), angeordnet in der Demontage-/Montagerichtung;
dass die erste Druckstange (131) verwendet wird zum Unterstützen des Einrastteils (120);
dass zwei Enden des elastischen Elements (132) in der Demontage-/Montagerichtung entsprechend an der ersten Druckstange (131) und der zweiten Druckstange (133) angeordnet sind; und
dass, in der Demontage-/Montagerichtung, eine Öffnung im Ende, wo sich die zweite Druckstange (133) befindet, des zweiten Hohlraums (111) gebildet ist, sodass ein externer Antriebsteil in der Lage ist, sich durch die Öffnung zu erstrecken, die zweite Druckstange (133) anzutreiben, um sich zur ersten Druckstange (131) hin oder von dieser weg zu bewegen, und so den Einrastteil (120) anzutreiben, um sich zwischen der ersten Position und der zweiten Position zu bewegen.

7. Verriegelungsmechanismus nach Anspruch 6, **dadurch gekennzeichnet, dass**
der Einrastteil (120) einen Metallteil umfasst; und
die erste Druckstange (131) mit einem Permanentmagneten (134) zum Anziehen des Einrastteils (120) versehen ist, um den Einrastteil (120) anzutreiben, um sich zu bewegen.

8. Verriegelungsmechanismus nach Anspruch 6, **dadurch gekennzeichnet, dass**
eine ringförmige Endfläche (140) im zweiten Hohlraum (111) angeordnet ist, wobei die Endfläche (140) senkrecht zur Demontage-/Montagerichtung ist; und die Endfläche (140) zum Durchgangsloch (112) zeigt;
die Endfläche (140) mit einer ersten Positionierungsnut (141) und einer zweiten Positionierungsnut (142) versehen ist, die in einer umlaufenden Richtung voneinander beabstandet angeordnet sind, und wobei die Tiefe der ersten Positionierungsnut (141) in der Demontage-/Montagerichtung kleiner als die der zweiten Positionierungsnut (142) in der Demontage-/Montagerichtung ist;
der Übertragungsteil (130) mit einem Positionierungselement (135) versehen ist; wobei das Positionierungselement (135) umschaltbar in der ersten Positionierungsnut (141) und der zweiten Positionierungsnut (142) aufgenommen ist; wobei, wenn das Positionierungselement (135) am Boden der ersten Positionierungsnut (141) befindlich ist, der Einrastteil (120) an der ersten Position gehalten wird; wobei, wenn das Positionierungselement (135) am Boden der zweiten Positionierungsnut (142) befindlich ist, der Einrastteil (120) an der zweiten Position gehalten wird; und
das Positionierungselement (135) in der Lage ist, sich zusammen mit der Bewegung des Übertragungsteils (130) in der Demontage-/Montagerichtung von der Positionierungsnut zu lösen und sich zusammen mit der Rotation des Übertragungsteils (130) in die andere Positionierungsnut zu bewegen.

9. Verriegelungsmechanismus nach Anspruch 8, **dadurch gekennzeichnet, dass**
das Verriegelungselement (100) ferner eine hohle Bodenhülse (150) umfasst, die sich in den zweiten Hohlraum (111) erstreckt und außerhalb zumindest eines Teils des Übertragungsteils (130) in einer umschließenden Weise angeordnet ist; und
die Endfläche (140) am Ende, nahe dem Durchgangsloch (112), der Bodenhülse (150) angeordnet ist.

10. Verriegelungsmechanismus nach Anspruch 8, **dadurch gekennzeichnet, dass**
das Positionierungselement (135) ein Positionierungsstift oder ein konvexer Block ist und an der zweiten Druckstange (133) angeordnet ist.

11. Verriegelungsmechanismus nach Anspruch 6, **dadurch gekennzeichnet, dass**
das Ende, das zur Öffnung zeigt, der zweiten Druckstange (133) mit einer Antriebsbefestigungsnut (160) für gegenseitigen Eingriff mit dem externen Antriebsteil versehen ist.

12. Verriegelungsmechanismus nach Anspruch 5, **dadurch gekennzeichnet, dass**
das Verriegelungselement (100) mit mehreren Einrastteilen (120) versehen ist und das Gehäuse (110) mit mehreren entsprechenden Durchgangslöchern (112) versehen ist; und wobei die mehreren Einrastteile (120) durch den Übertragungsteil (130) angetrieben werden, um sich synchron zu bewegen, sodass die mehreren Einrastteile (120) gleichzeitig an den ersten Positionen und den zweiten Positionen lokalisierbar sind.

13. Anordnung, umfassend ein Batterie-Pack und den Verriegelungsmechanismus nach einem der Ansprüche 1 bis 12, **dadurch gekennzeichnet, dass** das Batterie-Pack mit einem Flansch (310) versehen ist, wobei der Flansch (310) einen dritten Hohlraum (311) aufweist, durch den das Verriegelungselement (100) des Verriegelungsmechanismus hindurchdringt.

14. Fahrzeug, **dadurch gekennzeichnet, dass** es den Verriegelungsmechanismus nach einem der Ansprüche 1 bis 12 umfasst; und dass das Verriegelungsbefestigungselement (200) fest am Fahrzeug angeordnet ist.

## Revendications

1. Mécanisme de verrouillage pour un bloc de batteries, **caractérisé en ce qu'**il comprend :
un organe de verrouillage (100) et un organe d'ajustement de verrouillage (200), dans lequel l'organe de verrouillage (100) comprend un logement (110) et une portion d'encliquetage (120) ;
un élément parmi le logement (110) et l'organe d'ajustement de verrouillage (200) est fourni de façon fixe dans le bloc de batteries, et l'autre est agencé de façon fixe dans une position au niveau de laquelle le bloc de batteries est fixé ;
la portion d'encliquetage (120) est mobile entre une première position et une deuxième position par rapport au logement (110) ; dans la première position, une partie de la portion d'encliquetage (120) s'étend hors du logement (110) pour être interverrouillée avec l'organe d'ajustement de verrouillage (200) ; et dans la deuxième position, la portion d'encliquetage (120) est rétractée jusque dans le logement (110) pour être déverrouillée avec l'organe d'ajustement de verrouillage (200) ; l'organe d'ajustement de verrouillage (200) est pourvu d'une première cavité (210) ; le logement (110) est pourvu d'une tête qui peut s'étendre jusque dans, ou être rétractée de, la première cavité (210) lorsque le logement et l'organe d'ajustement de verrouillage (200) se déplacent l'un relativement à l'autre dans une direction de démontage/montage ;
le logement (110) est pourvu d'une deuxième cavité (111) s'étendant jusqu'à la tête pour recevoir la portion d'encliquetage (120) ; une paroi latérale du logement (110) est pourvue d'un trou traversant (112) en communication avec la deuxième cavité (111) ;
dans un état interverrouillé, la tête s'étend jusque dans la première cavité (210), et la portion d'encliquetage (120) se déplace dans la première position et est serrée entre une paroi interne de la première cavité (210) et une paroi interne du logement (110) ; et
dans un état déverrouillé, la portion d'encliquetage (120) se déplace dans la deuxième position, et la tête est rétractée de la première cavité (210).

2. Mécanisme de verrouillage selon la revendication 1, **caractérisé en ce que**,
un degré (211) est agencé dans la première cavité (210) ; et
dans la première position, la portion d'encliquetage (120) est en contact avec le degré (211), et est serrée entre le degré (211) et une paroi interne du trou traversant (112).

3. Mécanisme de verrouillage selon la revendication 2, **caractérisé en ce que**,
la portion d'encliquetage (120) est sphérique, et le trou traversant (112) est un trou traversant cylindrique ayant le même diamètre que la portion d'encliquetage (120) ; et
lorsque la tête du logement (110) s'étend jusque dans la première cavité (210), la portion d'encliquetage (120) est mobile entre la première position et la deuxième position dans une direction axiale du trou traversant (112).

4. Mécanisme de verrouillage selon la revendication 3, **caractérisé en ce que**,
un angle inclus est formé entre la direction axiale du trou traversant (112) et une direction d'épaisseur de la paroi latérale, et une direction d'inclinaison du degré (211) est cohérente avec la direction axiale du trou traversant (112).

5. Mécanisme de verrouillage selon la revendication 1, **caractérisé en ce que**,
l'organe de verrouillage (100) comprend en outre une portion de transmission (130) située dans la deuxième cavité (111) et utilisée pour entraîner la portion d'encliquetage (120) à se déplacer entre la première position et la deuxième position.

6. Mécanisme de verrouillage selon la revendication 5, **caractérisé en ce que**, la portion de transmission (130) comprend : une première tige de poussée (131), un élément élastique (132) et une deuxième tige de poussée (133) agencés dans la direction de démontage/montage ;
la première tige de poussée (131) est utilisée pour supporter la portion d'encliquetage (120) ;
deux extrémités de l'élément élastique (132) dans la direction de démontage/montage sont respectivement agencées sur la première tige de poussée (131) et la deuxième tige de poussée (133) ; et
dans la direction de démontage/montage, une ouverture est formée dans l'extrémité, où la deuxième tige de poussée (133) est située, de la deuxième cavité (111), de sorte qu'une partie d'entraînement externe puisse s'étendre à travers l'ouverture, entraîner la deuxième tige de poussée (133) à se déplacer vers ou à l'écart de la première tige de poussée (131), et entraîner ainsi la portion d'encliquetage (120) à se déplacer entre la première position et la deuxième position.

7. Mécanisme de verrouillage selon la revendication 6, **caractérisé en ce que**,
la portion de transmission (120) comprend une partie métallique ; et
la première tige de poussée (131) est pourvue d'un aimant permanent (134) pour attirer la portion d'encliquetage (120) de façon à entraîner la portion d'encliquetage (120) à se déplacer.

8. Mécanisme de verrouillage selon la revendication 6, **caractérisé en ce que**,
une face d'extrémité annulaire (140) est agencée dans la deuxième cavité (111), la face d'extrémité (140) est perpendiculaire à la direction de démontage/montage, et la face d'extrémité (140) fait face au trou traversant (112) ;
la face d'extrémité (140) est pourvue d'une première rainure de positionnement (141) et d'une deuxième rainure de positionnement (142) qui sont agencées à distance l'une de l'autre dans une direction circonférentielle, et la profondeur de la première rainure de positionnement (141) dans la direction de démontage/montage est inférieure à celle de la deuxième rainure de positionnement (142) dans la direction de démontage/montage ;
la portion de transmission (130) est pourvue d'un élément de positionnement (135) ; l'élément de positionnement (135) est reçu de façon commutable dans la première rainure de positionnement (141) et la deuxième rainure de positionnement (142) ; lorsque l'élément de positionnement (135) est situé au fond de la première rainure de positionnement (141), la portion d'encliquetage (120) est maintenue dans la première position ; lorsque l'élément de positionnement (135) est situé au fond de la deuxième rainure de positionnement (142), la portion d'encliquetage (120) est maintenue dans la deuxième position ; et
l'élément de positionnement (135) peut se dégager de la rainure de positionnement conjointement avec le déplacement de la portion de transmission (130) dans la direction de démontage/montage et de se déplacer jusque dans l'autre rainure de positionnement conjointement avec la rotation de la portion de transmission (130).

9. Mécanisme de verrouillage selon la revendication 8, **caractérisé en ce que**,
l'organe de verrouillage (100) comprend en outre un boîtier de fond creux (150) qui s'étend jusque dans la deuxième cavité (111) et est agencé à l'extérieur d'au moins une partie de la portion de transmission (130) d'une façon emmanchée ; et
la face d'extrémité (140) est agencée au niveau de l'extrémité, à proximité du trou traversant (112), du boîtier de fond (150).

10. Mécanisme de verrouillage selon la revendication 8, **caractérisé en ce que**,
l'élément de positionnement (135) est une broche de positionnement ou un bloc convexe et agencé sur la deuxième tige de poussée (133).

11. Mécanisme de verrouillage selon la revendication 6, **caractérisé en ce que**,
l'extrémité, faisant face à l'ouverture, de la deuxième tige de poussée (133) est pourvue d'une rainure d'ajustement d'entraînement (160) pour une prise mutuelle avec la partie d'entraînement externe.

12. Mécanisme de verrouillage selon la revendication 5, **caractérisé en ce que**,
l'organe de verrouillage (100) est pourvu d'une pluralité de portions d'encliquetage (120), et le logement (110) est pourvu d'une pluralité de trous traversants correspondants (112) ; et la pluralité de portions d'encliquetage (120) sont entraînées par la portion de transmission (130) pour se déplacer de façon synchrone, de sorte que la pluralité de portions d'encliquetage (120) puissent être situées au niveau des premières positions et des deuxièmes positions simultanément.

13. Ensemble comprenant un bloc de batteries et le mécanisme de verrouillage selon l'une quelconque des revendications 1 à 12, **caractérisé en ce que** le bloc de batteries est pourvu d'une bride (310), la bride (310) a une troisième cavité (311) à travers laquelle pénètre l'organe de verrouillage (100) du mécanisme de verrouillage.

14. Véhicule, **caractérisé en ce qu'**il comprend le mécanisme de verrouillage selon l'une quelconque des revendications 1 à 12 ; et l'organe d'ajustement de verrouillage (200) est agencé de façon fixe sur le véhicule.
